# EUROPEAN PATENT APPLICATION

(11) **EP 2 051 484 A2**
(43) Date of publication of application: **22.04.2009**
(21) Application number: 08103269.0
(22) Date of filing: 31.03.2008
(51) Int. Cl.: H04L 29/08, G06F 17/30, H04B 7/185

(54) **Satellite Data Network Acceleration**

(30) Priority: 18.10.2007 US 874643
(71) Applicant: Gilat Satellite Networks, Inc., 49130 Petah Tikva (IL)
(72) Inventor: Argov, Nitay, 40 600, Tel Mond (IL); Carasso, Moshe, 69355, Tel Aviv (IL)
(74) Representative: Wallin, Nicholas James

(57) **Abstract**

A satellite data network (200) may include one or more acceleration systems (220,240) for acceleration data transfers through the network. The acceleration systems (220,240) may spoof one or more protocols of a server (215) to respond to requests from a client (210). One protocol that may be spoofed is the Common Internet File System (CIFS) protocol for communication across platforms having different file systems. The acceleration system (220,240) may send data to the client or the server by maximizing usage efficiency of the bandwidth. The acceleration system (220,240) may further cache information needed for responding to one or more requests so that it may respond to the requests without consulting the server (215). In one or more arrangements, a client side acceleration system (240) and a server side acceleration system (220) may be used concurrently to further enhance data transfer speeds and efficiency.

## Description

### TECHNICAL FIELD

The present invention relates to a method and system for accelerating data transfers in a network.

### BACKGROUND

The problem of facilitating communication between systems having different file systems has engendered various software and hardware tools that help to bridge the gap between disparate file systems. In one example, the Common Internet File System (CIFS) is used in various environments to share files and for execution of various functions between computing systems using different file systems. However, file sharing protocols such as CIFS may often be inefficient and create significant delays in the transmission of data depending on the type of network in which it is used. For example, CIFS protocol uses multiple short messages (i.e., message sizes that do not maximize the bandwidth) between a computer and network resources to accomplish a given task. Further, the default data windowing and acknowledgment methods of CIFS make the protocol susceptible to transfer delays. These issues are magnified when file sharing protocols such as CIFS are used in satellite networks.

For the foregoing reasons, a system and method for accelerating data transmission in satellite networks is needed.

### SUMMARY

A method and system for accelerating data transfers in a network may include a client side acceleration system and/or a server side acceleration system. Each acceleration system may cache information that is frequency accessed or most recently requested. Requests from a client system may be processed by the acceleration system (e.g., responding to the request) if the acceleration system has cached the information for responding to the request. Alternatively, the acceleration system may forward the request to a server storing the information. The acceleration system or systems may further spoof protocols (e.g., CIFS protocol) used by the server so that interactions between the client and the acceleration system are conducted as if the client were interacting directly with the server. Additionally or alternatively, if the acceleration system does not have the requested information cached, the requested information may be requested from a server. In such instances, the acceleration system may cache the requested information upon receipt from the server. Caching the requested information may allow the acceleration system to handle future requests for the information without having to contact the server.

According to one or more further aspects, an acceleration system and method may cache requests and/or responses to maximize the efficiency of bandwidth usage. For example, an acceleration system may receive data from a server in 64 KB blocks. However, when the acceleration system forwards that data to a client system, the data may be divided into smaller blocks depending on the available bandwidth of the connection between the acceleration system and the client system. The data that passes through the acceleration system may further be recorded for auditing/record-keeping purposes.

These as well as other advantages and aspects of the invention are apparent and understood from the following detailed description of the invention, the attached claims, and the accompanying drawings.

### BRIEF DESCRIPTION OF THE DRAWINGS

The present invention is illustrated by way of example and not limited in the accompanying figures in which like reference numerals indicate similar elements and in which:

FIG. 1 illustrates a block diagram of a computing environment in which one or more aspects described herein may be implemented.

FIG. 2 illustrates a block diagram of a data network environment in which one or more aspects described herein may be implemented.

FIG. 3 is a flowchart illustrating a method for facilitating a service request from a client system according to one or more aspects described herein.

FIG. 4 illustrates a message flow for processing a service request according to one or more aspects described herein.

FIG. 5 is a flowchart illustrating a method for processing a data request according to one or more aspects described herein.

FIG. 6 illustrates a message flow for processing a data request according to one or more aspects described herein.

FIG. 7 illustrates a message flow for processing a data or service request

### DETAILED DESCRIPTION

In the following description of the various embodiments, reference is made to the accompanying drawings, which form a part hereof, and in which is shown by way of illustration various embodiments in which the invention may be practiced. It is to be understood that other embodiments may be utilized and structural and functional modifications may be made without departing from the scope of the present invention.

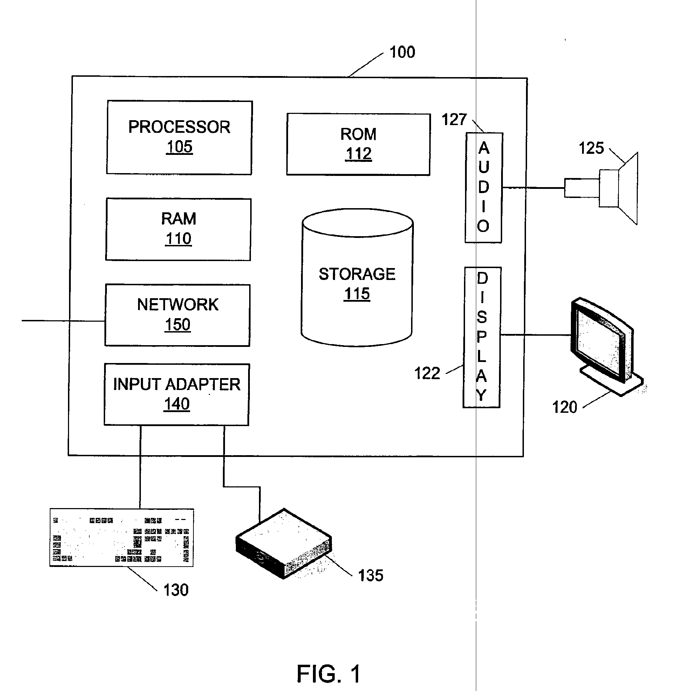

FIG. 1 illustrates a computing environment in which one or more aspects described herein may be implemented. A computing device such as computer 100 may house a variety of components for inputting, outputting, storing and processing data. For example, processor 105 may perform a variety of tasks including executing one or more applications, retrieving data from a storage device such as storage 115 and/or outputting data to a device such as display 120. Processor 105 may be connected to Random Access Memory (RAM) module 110 in which application data and/or instructions may be temporarily stored. RAM module 110 may be stored and accessed in any order, providing equal accessibility to the storage locations in RAM module 110. Computer 100 may further include Read Only Memory (ROM) 112 which allows data stored thereon to persist or survive after computer 100 has been turned off. ROM 112 may be used for a variety of purposes including for storage of computer 100's Basic Input/Output System (BIOS). ROM 112 may further store date and time information so that the information persists even through shut downs and reboots. In addition, storage 115 may provide long term storage for a variety of data including applications and data files. Storage 115 may include any of a variety of computer readable mediums such as disc drives, optical storage mediums, magnetic tape storage systems, flash memory and the like. In one example, processor 105 may retrieve an application from storage 115 and temporarily store the instructions associated with the application RAM module 110 while the application is executing.

Computer 100 may output data through a variety of components and devices. As mentioned above, one such output device may be display 120. Another output device may include an audio output device such as speaker 125. Each output device 120 and 125 may be associated with an output adapter such as display adapter 122 and audio adapter 127, which translates processor instructions into corresponding audio and video signals. In addition to output systems, computer 100 may receive and/or accept input from a variety of input devices such as keyboard 130, storage media drive 135 and/or microphone (not shown). As with output devices 120 and 125, each of the input devices 130 and 135 may be associated with an input adapter 140 for converting the input into computer readable/recognizable data. In one example, voice input received through microphone (not shown) may be converted into a digital format and stored in a data file. In one or more instances, a device such as media drive 135 may act as both an input and output device allowing users to both write and read data to and from the storage media (e.g., DVD-R, CD-RW, etc.).

Computer 100 may further include one or more communication components for receiving and transmitting data over a network. Various types of networks include cellular networks, digital broadcast networks, satellite data networks, Internet Protocol (IP) networks and the like. Computer 100 may include adapters suited to communicate through one or more of these networks. In particular, computer 100 may include network adapter 150 for communication with one or more other computer or computing devices over an IP network. In one example, adapter 150 may facilitate transmission of data such as electronic mail messages and/or financial data over a company or organization's network. In another example, adapter 150 may facilitate transmission or receipt of information from a world wide network such as the Internet. Adapter 150 may include one or more sets of instructions relating to one or more networking protocols. For example adapter 150 may include a first set of instructions for processing IP network packets as well as a second set of instruction associated with processing satellite network packets. In one or more arrangements, network adapter 150 may provide wireless network access for computer 100.

One of skill in the art will appreciate that computing devices such as computer 100 may include a variety of other components and is not limited to the devices and systems described in FIG. 1.

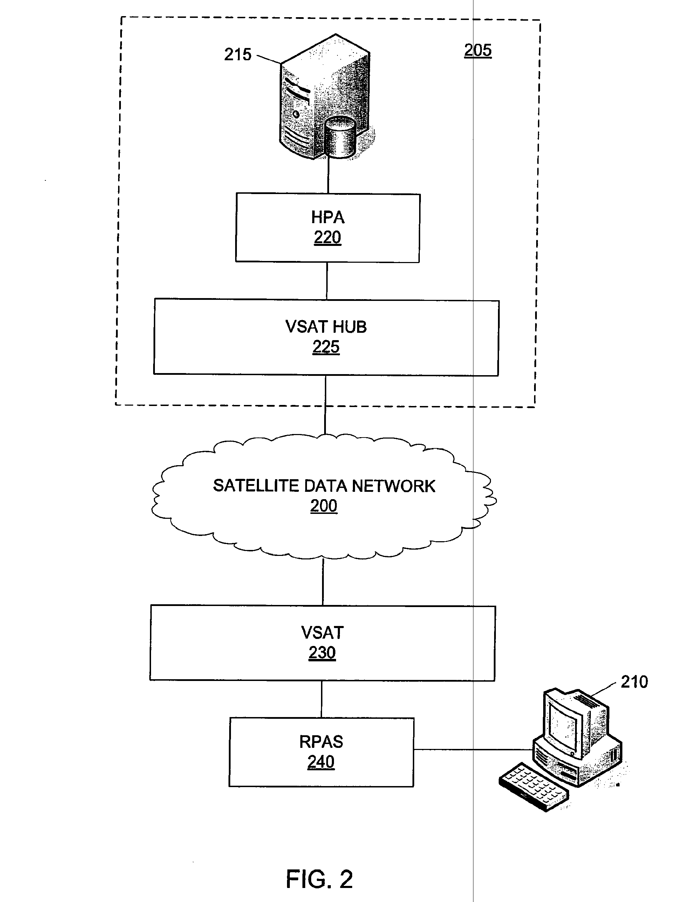

FIG. 2 illustrates a satellite data network through which systems may exchange files and provide other services. Data network 200 may include a data center, e.g., data center 205, that provides data and services to one or more remote network systems and users like personal computer (PC) 210. Data center 205 may include a variety of systems such as server 215, hub page accelerator (HPA) sub-system 220 and very small aperture terminal (VSAT) hub 225. Server 215 may be configured to store various data and applications that may be accessed from client systems such as PC 210. Server 215 may include one or more storage devices (not shown) that use a first file system or architecture. VSAT hub 225 may be configured to facilitate communication of data through satellite network 200. VSAT hub 225 may be responsible for coordinating communications between multiple remote VSATs such as VSAT 230 and routing communications to an appropriate destination. Further, VSAT hub 225 may include HPA sub-system 220 configured to provide caching of recently and/or frequency accessed data and applications so that the data or applications may be accessed with less latency or at a faster transfer rate than from server 215. In one example, if server 215 is connected to VSAT hub 225 through a wide-area network, any network latency may increase the response time and transfer rate for data sent to or received from server 215. If data is cached in HPA sub-system 220 of VSAB hub 225, however, the latency would be significantly reduced since the latency resulting from the wide-area network may be eliminated. Thus, any data stored at HPA sub-system 220 and transferred from HPA sub-system 220 may be faster than obtaining the data from server 215 and transmitting it through VSAT hub 225. HPA sub-system 220 may cache data and applications that are used either by server 215 or by one or more client systems such as PC 210. HPA sub-system 220 may be included in VSAT hub 225 or may be configured as a separately system or device from VSAT hub 225. Alternatively, one or more of VSAT hub 225, HPA sub-system 220 and/or server 215 may be configured as a separate system (i.e., not apart of data center 205).

On the remote user's end, a VSAT such as VSAT 230 may be used by PC 210 to communicate with one or more other systems (e.g., server 215) through satellite data network 200. VSAT 230 may be used by one or more remote systems to access data network 220. In one or more configurations, PC 210 may use a second file system different from the first file system used by server 215. In order to facilitate communication and access between PC 210 and server 215, software, hardware and/or firmware may be used. In one example, CIFS protocol software, hardware and/or firmware may be used to coordinate communications between systems having two different file systems. CIFS protocols may further be based on Server Message Block (SMB) protocol. Additionally or alternatively, VSAT 230 may include remote page acceleration sub-system (RPAS) 240. RPAS 240 may be used to cache data and applications that are frequently used by PC 210 and/or accessed by one or more other systems.

As discussed, the systems and components of FIG. 2 may communicate through a satellite network. Accordingly, VSAT 230 may be configured to transmit data to a satellite (not shown) that may subsequently direct the data to an appropriate VSAT hub such as hub 225. Similarly, VSAT hub 225 may respond to data requests and/or transmit its own data request through a satellite to a receiving VSAT such as VSAT 230. One of ordinary skill in the art will appreciate that a variety of additional or alternative systems and devices may be used in a satellite data network environment.

According to one or more aspects, RPAS 240 and/or HPA sub-system 220 may be used to reduce bandwidth requirements in satellite data network 200 by spoofing one or more systems. RPAS 240 may include software to provide a network resource interface for PC 210. By way of example, PC 210 may request access to a file hosted by server 215. In order to reduce the amount of data that is communicated between VSAT 230 and VSAT hub 225, RPAS 240 may provide an interface that spoofs the interface of server 215. As such, PC 210 may interact with RPAS 240 as if it were interacting with server 215. RPAS 240, in turn, may cache the commands and/or data received from PC 210 and coordinate the transmission of such commands and/or data to more efficiently utilize bandwidth. If RPAS 240 has cached the information requested by PC 210, RPAS 240 may respond to PC 210 rather than requesting the information from server 215. HPA sub-system 220 may operate in a similar way for communications to and from server 215. For example, HPA sub-system 220 may respond to data requests from PC 210 or RPAS 240 from HPA sub-systems 220's own storage if the information has been cached. In another example, HPA sub-system 220 may coordinate transmissions of data from server 215 to efficiently use satellite network bandwidth.

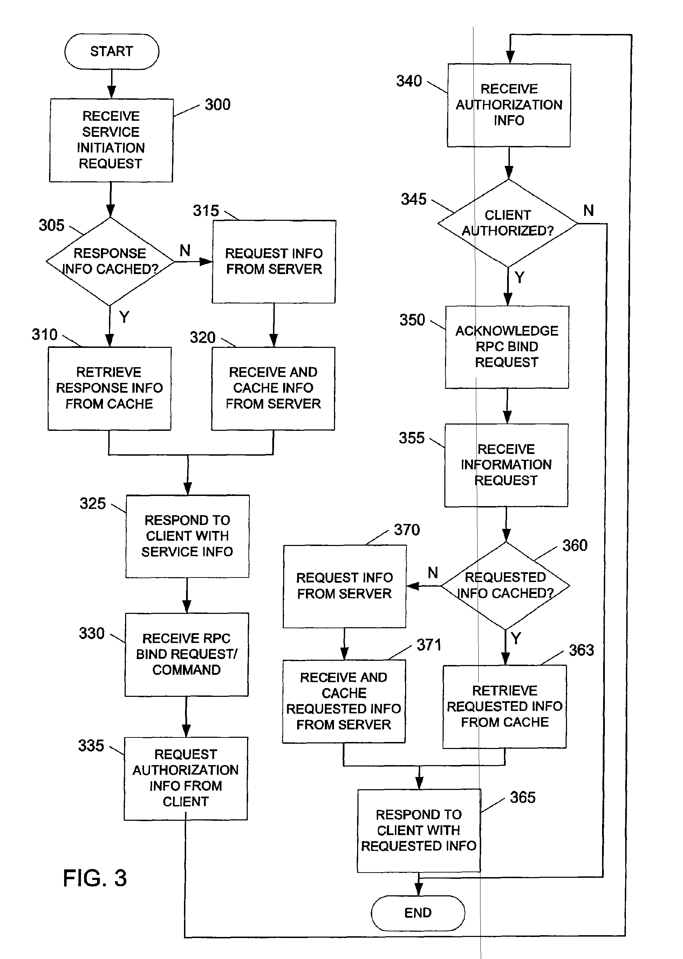

FIG. 3 is a flowchart illustrating a method for facilitating a service request from a client system (e.g., PC 210 of FIG. 2) using client-side spoofing. Spoofing, as used herein, generally relates to a first system acting as a second system. For example, an acceleration system may spoof a server by communicating with a client system as if the acceleration system was the server. When spoofing, a spoofing system may replicate the protocols (e.g., CIFS protocol) used by the system or systems being spoofed so that a client system does not need to adjust its own protocols to communicate with the spoofing system. In many situations, the client system might not know that it is communicating with a spoofing system rather than the server or system being spoofed.

In step 300, an acceleration system such as RPAS 240 of FIG. 2 may receive a service initiation request for services provided by a server system such as server 215 of FIG. 2. The service request may relate to a workstation service request and/or a server service request. Workstation services requests generally relate to requests for domain and/or name/IP information from a particular system. A server services request, on the other hand, refers to a request for system type information. For example, system type may relate to whether a system is a workstation/server and, if so, whether the server is an EXCHANGE server, a NOVEL server and the like. Thus, in such an example, a service initiation request may correspond to a request to access e-mail services through the EXCHANGE server.

In step 305, the acceleration system may determine whether it has the necessary service information in its cache to respond to the initiation request. For example, service information for responding to an initiation request that may be cached may include the requested data, a media identification code (MID), a packet identifier (PID), a transponder identification (TID), a user identification (UID), a file or folder name containing requested data, a command and/or a subcommand level of information. If the acceleration system determines that it has the required information cached, the acceleration system may retrieve such information from its cache in step 310. If the acceleration system does not have the service information cached, the acceleration system may forward the service request to a server system or a server-side acceleration sub-system in step 315. In response to the request, the client side acceleration sub-system may receive and cache a response with the necessary service information from the server or the server-side acceleration sub-system in step 320. The client side acceleration sub-system may cache the response so that future requests for the same information may be addressed without having to re-request the information from the server or the server side acceleration sub-system.

In step 325, the acceleration sub-system may respond to the requesting client with the service information. The response may be formatted or structured in accordance with the protocol used by the server and/or expected by the client system. For example, the acceleration sub-system may use the CIFS protocol to communicate with the client system. Service information may include a list of services available, an acknowledgment of the service initiation request, authorization information and the like. Once the service session has been initialized, the acceleration system may receive a remote procedure call (RPC) bind command in step 330. An RPC bind command or request may be used to bind a client's RPC to a particular server or host that will handle that procedure call. In step 335, the acceleration system may request authentication or authorization information from the requesting client. In one or more configurations, the acceleration system may issue a read ANDX request to the client system. In step 340, the acceleration system may receive a response form the client system including the requested authorization data. The response may be sent in the form of a write ANDX request. Once received, the acceleration system may verify that the authorization information is valid and that the user is allowed to access the requested services or resources in step 345.

In step 350, if the acceleration system determines the client is authorized to use the service, the acceleration system may acknowledge the bind command. On the other hand, if the acceleration system determines that the client is not authorized, the session may be denied and/or closed. In step 355, the acceleration system may then receive an information request from the client. The information request may, for example, be related to a particular file or directory hosted by the server. The information request may include file identification information such as a name or other identifier and/or an offset for a specifying a particular portion of data in the file. In step 360, the acceleration system may determine whether it has the requested file cached. If so, the acceleration system may retrieve the requested file from its cache in step 363 and subsequently respond to the client with the requested information in step 365. If, however, the acceleration system does not have the requested file or directory cached, the acceleration system may request the data from a server side system in step 370. In response to the request, the acceleration system may receive and cache a response from the server side system containing the requested information in step 371. Once the requested information is received from the server side system, the acceleration system may respond to the client as discussed with respect to step 365.

In one or more configurations, the acceleration system may also receive requests from the client system to close or terminate the service session. The acceleration system may terminate the session and forward an acknowledgment to the client system. Terminating a session may include closing a port or connection with the client system and/or unregistering the client system from a list of current and/or authorized users.

Since requests from the client system may be handled by the client side acceleration system whenever possible (rather than by the server), delays and latency in obtaining and transmitting requested data to the client system are significantly reduced. In addition, the efficiency of bandwidth usage between client side systems and server side systems may be increased by reducing the amount of small messages (i.e., messages using less than the maximum bandwidth) transmitted between server side system and client side systems.

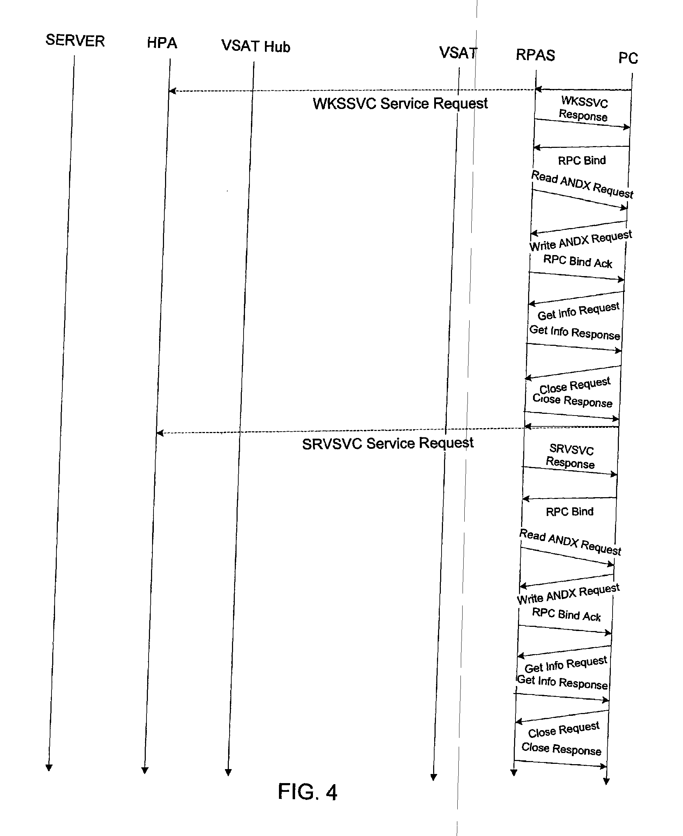

FIG. 4 is a diagram illustrating a messaging flow using a client side acceleration system to facilitate service requests. A client system such as a remote web browsing computer may initially submit a service request through a client side acceleration system. The client side acceleration system may either handle the service request itself or, if it is unable to handle the request, may optionally transmit the request to a server side system (e.g., hub page acceleration system or the server itself) for processing. The acceleration system may handle most, if not all, requests from the client system based on cached information. In one or more instances, the acceleration system may consult with a server-side system if the requested data is not cached in the acceleration system.

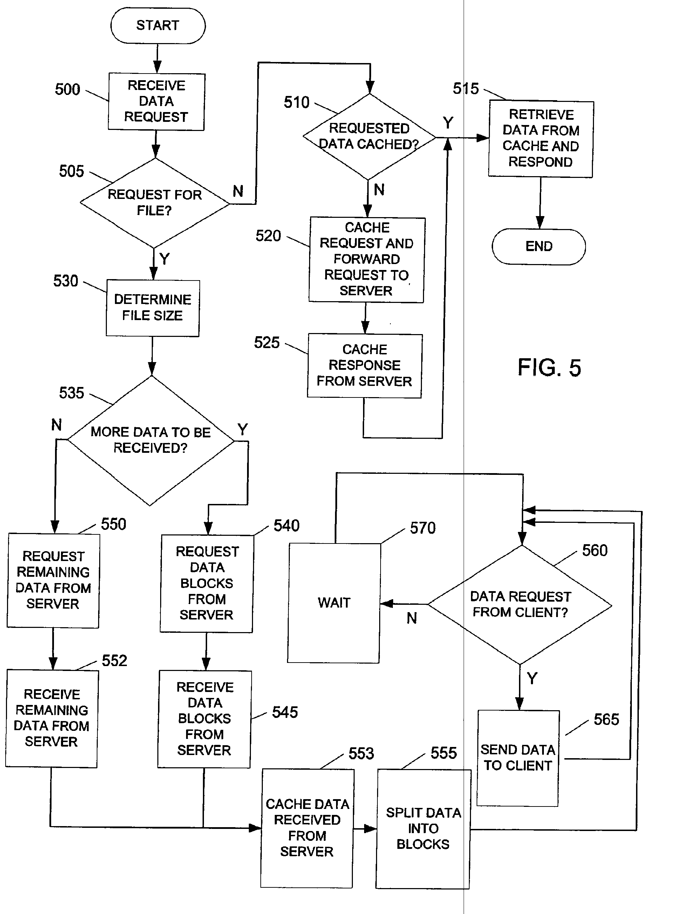

FIG. 5 is a flowchart illustrating a method for processing a data request using an acceleration system. In step 500, a data request may be received from a client system. The data request may include a request for a specific file, a request for multiple files and/or data matching a particular query, a request for information about the server and the like. In step 505, the acceleration system may determine whether the request is for a file. If the request is not for a file, the acceleration system may determine whether the requested data is cached in the acceleration system in step 510. If so, the acceleration system may retrieve the requested data from its cache and respond back the client system with the requested information in step 515. If, on the other hand, the requested data is not cached, the acceleration system may cache the request and forward the request to a server having the requested information in step 520. In step 525, the acceleration system may receive a response to the request from the server, or a server-side system, and cache the response. The acceleration system may then respond to the client system with the cached response, as discussed in step 515.

If, however, the request is for a file, the acceleration system may determine the file size associated with the requested file in step 530. File size information may be cached in the acceleration system or may be retrieved from the server. In step 535, the acceleration system may request the file from the server. In step 535, the acceleration system may determine whether there is more than a predefined amount of the file left to receive from the server. In one example, an acceleration system may send and receive data in 64KB packets to maximize efficiency and usage of bandwidth. If more than the predefined amount of data still needs to be received from the server, the acceleration system may request the predefined amount of remaining data in step 540. Thus, in the above example, the acceleration system may request a 64KB block of the requested file from the server. In step 545, the acceleration system may receive the requested block of the file from the server. Alternatively, if the predefined amount or an amount less than the predefined amount remains to be received from the server, the acceleration system may request the remaining data from the server in step 550. In step 552, the requested remaining data may be received from the server in response to the request.

According to one or more aspects, the data received from the server may be cached in the acceleration system for future use or distribution in step 553. The acceleration system may then respond to requests for the same data without having to re-request the information from the server. Additionally or alternatively, data may be cached for a predetermined amount of time or may be stored as long as there is sufficient storage. In one or more arrangements, data may be deleted based on a first in first out (FIFO) strategy. Thus, a first data file cached before a second data file may be subject to deletion prior to the second data file.

In step 555, the acceleration system may divide the received data into a second predefined data block size. The second predefined data block size may defined based on bandwidth restrictions of a network between the acceleration system and the client system, traffic in the network, protocol standards, client system capabilities and the like. In one example, the second predefined data block size may be 4 KB. In one or more configurations, an acceleration system may concurrently request additional data from the server if more data than the predefined amount remains to be received. In step 560, the acceleration system may determine whether the client system has requested received portions of the file. If so, the acceleration system may transmit the requested data block to the client system in step 565. If, however, the client system has not requested the received portions of the file, the acceleration system may wait a predetermined amount of time in step 570 before determining again whether the client system has made a data request (e.g., step 565).

The process may continue until the entire file or the entire requested portion of the file has been transmitted to the client system. The acceleration system may optionally cache the entire file in a local database or storage system for faster access in response to future requests. Alternatively, the acceleration system may delete the file or portions of the file once they have been transmitted and acknowledged by the client system.

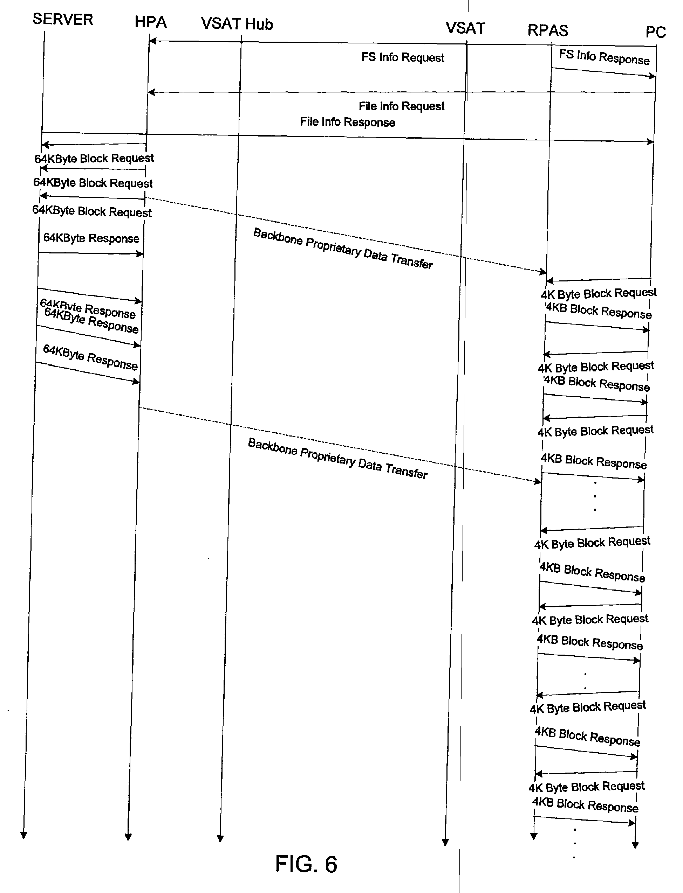

FIG. 6 illustrates a messaging flow for communicating file data between a server and a client using two acceleration systems. The client may initially issue a file system information request to determine a file system used by the hosting server. A response may be provided to the client from either the client-side acceleration system or a server-side system or both. The client may then request and receive information associated with a particular file. The acceleration system may then begin requesting and receiving file blocks of a first predefined size. The received file blocks may then be transmitted to the requesting client in blocks of a second predefined size. Generally, the second predefined size is smaller than the first predefined size. However, one of ordinary skill in the art will appreciate that the second predefined size may be greater or equal to the first predefined size in one or more arrangements.

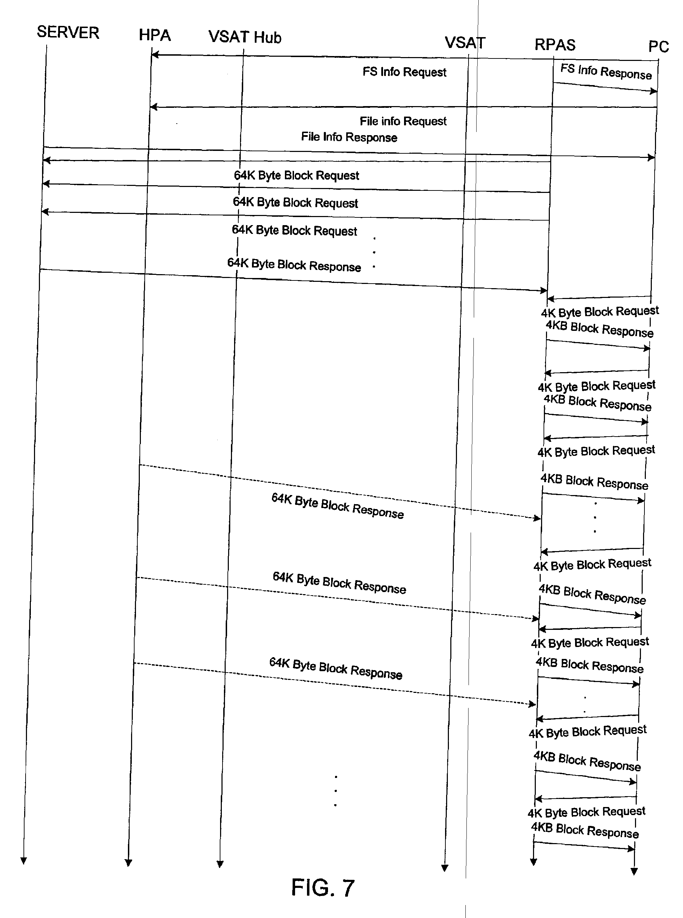

FIG. 7 illustrates a messaging flow for communicating between a server and a client using a client side acceleration system. The communication between the client and the client side acceleration system (e.g., RPAS 240 of FIG. 2) may be conducted in a similar manner as the messaging flow illustrated in FIG. 6. However, on the server side, data requests and other communications may be sent to a server without being filtered or processed by a server side acceleration system. For example, data requests may bypass or pass straight through the server side acceleration system if one exists. In such configurations, the server side acceleration system might not coordinate communications and data transmission to and from the server. That is, acceleration may be performed independent of the server side acceleration system.

While the methods and features discussed herein have been described, in large part, using a client side acceleration system, a server side acceleration system such as a hub page acceleration sub-system may be used in conjunction with or in place of client side acceleration. In particular, a hub page acceleration sub-system may receive transmissions one or more clients and cache the transmission (e.g., data requests) to maximize the use of bandwidth. For example, a hub page acceleration sub-system may cache multiple data requests and transmit them to a server at one time (e.g., as one data packet) to maximize the use of bandwidth. Cached information at an acceleration system or sub-system may be periodically or aperiodically updated with information from a server. In one example, updated information may be piggybacked in responses from the server.

Additionally, the methods and features recited herein may further be implemented through any number of computer readable media that are able to store computer readable instructions. Examples of computer readable media that may be used include RAM, ROM, EEPROM, flash memory or other memory technology, CD-ROM, DVD or other optical disk storage, magnetic cassettes, magnetic tape, magnetic storage and the like.

The present invention has been described in terms of preferred and exemplary embodiments thereof. Numerous other embodiments, modifications and variations within the scope and spirit of the appended claims will occur to persons of ordinary skill in the art from a review of this disclosure.

## Claims

1. A method for accelerating data transfers in a network, the method comprising:
receiving, at an acceleration system, a first request for data from a client;
determining whether the data is cached in the acceleration system;
in response to determining that the data is not cached in the acceleration system, transmitting a second request for the data to a server;
receiving the data in one or more first blocks of a first predetermined size from the server in response to the second request; and
transmitting the data in one or more second blocks of a second predetermined size to the client.

2. The method of claim 1, wherein the acceleration system, the client and the server communicate through a satellite data network.

3. The method of claim 1, wherein the request for data from the client is made in accordance with a Common Internet File System (CIFS) protocol.

4. The method of claim 1, wherein the first predetermined size is greater than the second predetermined size.

5. The method of claim 1, wherein the acceleration system communicates with the server through a wide area satellite data network and wherein the acceleration system communicates with the client through a local area network.

6. The method of claim 1, further comprising in response to determining that the data is cached in the acceleration system, responding to the client with the data without retrieving the data from the server.

7. The method of claim 1, wherein the acceleration system includes a very small aperture terminal (VSAT).

8. The method of claim 7, wherein the server is connected to a satellite HUB in communication with the VSAT.

9. The method of claim 1, wherein the request for data includes a request to bind a remote procedure call (RPC).

10. A system for accelerating data transfers in a network, the system comprising:
a processor;
a transceiver; and
memory storing computer readable instructions that, when executed, cause the processor to perform a method comprising:
receiving, at the system, a first request for data from a client;
determining whether the data is cached in the system;
in response to determining that the data is not cached in the system, transmitting a second request for the data to a server;
receiving the data in one or more first blocks of a first redetermined size from the server in response to the second request; and
transmitting the data in one or more second blocks of a second predetermined size to the client.

11. The system of claim 10, wherein the request for data from the client is made in accordance with a Common Internet File System (CIFS) protocol.

12. The system of claim 10, wherein the first predetermined size is greater than the second predetermined size.

13. The system of claim 10, wherein the system communicates with the server through a a wide area satellite data network and wherein the system communicates with the client through a local area network.

14. The system of claim 10, wherein the memory further comprises instructions for responding to the client with the data without retrieving the data from the server in response to determining that the data is cached in the system.

15. A system comprising:
a remote acceleration system configured to receive one or more first requests from a client system and for responding to the one or more first requests if first information for responding to the one or more first requests is cached in the remote acceleration system; and
a hub acceleration system in communication with the remote acceleration system through a satellite data network, wherein the hub acceleration system is configured to:
receive one or more second requests from the remote acceleration system;
determine whether the hub acceleration system has cached second information for responding to the one or more second requests; and
in response to determining the second information is cached, responding to the remote acceleration system with the second information.

16. The system of claim 15, wherein the remote acceleration system is connected to the client system through a local area network.

17. The system of claim 15, wherein the hub acceleration system is included in a very small aperture terminal (VSAT) hub system.

18. The system of claim 15, wherein the one or more first requests includes a request for data or services from a server.

19. The system of claim 18, wherein the server is connected to the hub acceleration system through a local area network.

20. The system of claim 15, wherein the one or more second requests corresponds to the one or more first requests if the first information for responding to the one or more requests is not cached in the remote acceleration system.

21. The system of claim 15, wherein the hub acceleration system is further configured to request the second information from a server in response to determining that the second information is not cached in the hub acceleration system.
